# FASCICULE DE BREVET EUROPEEN

(11) **EP 3 626 496 B1**
(45) Date de publication et mention de la délivrance du brevet: **27.10.2021**
(21) Numéro de dépôt: 19197874.1
(22) Date de dépôt: 17.09.2019
(51) Int. Cl.: B60J 5/04

(54) **PORTE LATÉRALE À SÉCURITÉ RENFORCÉE POUR VÉHICULE**
VERSTÄRKTE SICHERHEITSSEITENTÜR FÜR FAHRZEUG
SIDE DOOR WITH ENHANCED SAFETY FOR VEHICLE

(43) Date de publication de la demande: 25.03.2020
(73) Titulaire: RENAULT s.a.s., 92100 Boulogne-Billancourt (FR)
(72) Inventeur: HENOT, Olivier, 78280 GUYANCOURT (FR); BROCHOT, Marc, 78180 Montigny le Bretonneux (FR); LEFORT, Gerard, 62118 ROEUX (FR); CHAILLOU, Benoit, 78280 GUYANCOURT (FR)

(56) Documents cités:
- FR-A1- 3 017 077
- FR-A1- 3 035 033
- US-A1- 2018 208 029

## Description

La présente invention est du domaine des véhicules, notamment des automobiles, plus particulièrement des portes latérales.

L'objet de l'invention concerne une porte de véhicule automobile avec une barre de renfort de bandeau, comprenant une armature de porte, des moyens de liaison statique permettant de relier la barre à l'armature dans une configuration initiale.

Dans les portes de l'art antérieur de ce type, la barre de renfort de bandeau est généralement fixée sur l'armature par soudage. Contrairement à la barre anti-intrusion qui est destinée à conférer à la porte une résistance à la déformation en cas de choc latéral en opérant une transmission de cet effort au reste de la structure de caisse par l'armature de porte, la barre de renfort de bandeau est un élément structurel de la porte qui est destiné à distribuer un effort mécanique issu d'un choc frontal à la structure de caisse du véhicule, bien souvent des éléments formant l'embrasure de porte. Tout comme la barre anti-intrusion, la barre de renfort de bandeau contribue à rigidifier la cellule de survie réalisée par la structure de caisse du véhicule, dans laquelle prennent place les occupants du véhicule. Bien souvent, la porte équipée d'une barre de renfort de bandeau est une porte avant de véhicule automobile dont la barre de renfort de bandeau permet la transmission de l'effort d'un choc frontal du pied avant au pied central de la structure de caisse, lesdits pieds avant et central définissant en partie l'embrasure de porte.

D'une manière connue, les moyens de fixation de la barre de renfort de bandeau assurent à la fois la liaison statique et la liaison dynamique de la barre à l'armature de porte. Les moyens utilisés pour créer la liaison dynamique requièrent une extrémité avant de la barre de renfort de bandeau soudée à l'armature de porte.

Or, la conception même de la porte rend parfois impossible le passage des pinces à souder au niveau de l'extrémité avant de la barre de renfort de bandeau. Il a en effet été relevé dans certaines architectures de porte, le besoin d'intégration d'un renfort de rétroviseur qui, de par son agencement approximativement à chevauchement de l'extrémité avant de la barre de renfort de bandeau, rend impossible la réalisation des points de soudure fixant l'extrémité avant de la barre de renfort de bandeau à l'armature de porte.

En l'absence de ces points de soudure au niveau de l'extrémité avant de la barre de renfort de bandeau, il y a un risque de fluage de l'extrémité avant de la barre de renfort de bandeau en cas de choc frontal, ce qui engendre une moindre efficacité de ce type de moyen de sécurisation de la cellule de survie des occupants du véhicule. FR-A-3017077 montre le préambule de la revendication 1.

L'invention a pour objet une porte comportant les caractéristiques susmentionnées qui comprend des moyens de liaison dynamique pour relier la barre à l'armature dans une configuration déformée de l'armature de porte, lesdits moyens de liaison dynamique comprenant au moins une butée longitudinale s'étendant au regard de la partie d'extrémité avant de la barre afin de s'opposer à son déplacement transversal lors d'un choc frontal, la butée étant réalisée directement dans le renfort d'articulations par emboutissage.

Selon l'invention, la porte comprend un caisson surmonté par un cadre destiné à recevoir un élément de vitrage, un renfort d'articulations et un renfort de fixation d'un rétroviseur, le renfort d'articulations étant fixé au caisson, notamment au niveau de son bord transversal avant, et au cadre, notamment au niveau d'une zone d'extrémité inférieure avant.

La porte peut en outre comprendre les caractéristiques suivantes, prises séparément ou en combinaison entre elles :
- la butée longitudinale est une butée de retenue s'étendant dans un plan sensiblement parallèle à la barre de renfort de bandeau,
- le renfort d'articulations s'étend verticalement le long d'approximativement toute la hauteur du bord transversal avant du caisson pour rendre apte la fixation des charnières supérieure et inférieure liant à rotation la porte à la caisse du véhicule,
- la barre de renfort de bandeau a un profil sensiblement en oméga en ce sens qu'elle comprend des bords longitudinaux d'interfaçage avec l'armature de porte, ces bords étant reliés entre eux par un pontet longitudinal délimitant une tête de bandeau et comportant une rainure s'étendant linéairement le long du pontet,

- la barre de renfort de bandeau est réalisée par pliage et/ou roulage et/ou emboutissage,
- le bord d'extrémité avant de la barre de renfort de bandeau est écartée du renfort d'articulations par un jeu longitudinal et/ou un jeu transversal, de telle sorte qu'en cas de choc frontal, l'armature de porte absorbe une quantité d'énergie avant que la barre de renfort de bandeau ne mette en liaison mécanique deux montants verticaux reliant directement le soubassement au pavillon du véhicule tout en délimitant en partie l'embrasure de porte,
- la barre de renfort de bandeau a une tête de bandeau s'étendant dans un plan incliné et comprend un créneau supérieur et un créneau inférieur reliés entre eux par la rainure longitudinale,
- la butée est assujettie au profil de la barre de renfort longitudinale de telle sorte que les bords supérieur et inférieur de la butée longitudinale s'étendent approximativement au droit d'une zone médiane de chacun des créneaux supérieur et inférieur.

L'invention concerne également un véhicule, notamment une automobile, comportant une caisse sur laquelle est montée de manière mobile une porte ayant les caractéristiques susmentionnées.

Quelques buts, caractéristiques et avantages de l'invention apparaîtront à la lecture de la description suivante, donnée uniquement à titre d'exemple non limitatif, et faite en référence aux dessins annexés.
[Fig.1] représente les éléments constitutifs d'une structure de porte de véhicule automobile, vue de l'extérieur.
[Fig. 2] illustre la structure de porte de la figure 1 en mettant en exergue des moyens de liaison des éléments constitutifs de la structure de porte.
[Fig. 3] représente un agrandissement de la porte de la figure 2 selon le plan de coupe III-III, représentant les moyens de liaison dynamique d'une barre de renfort de bandeau à l'armature de porte.

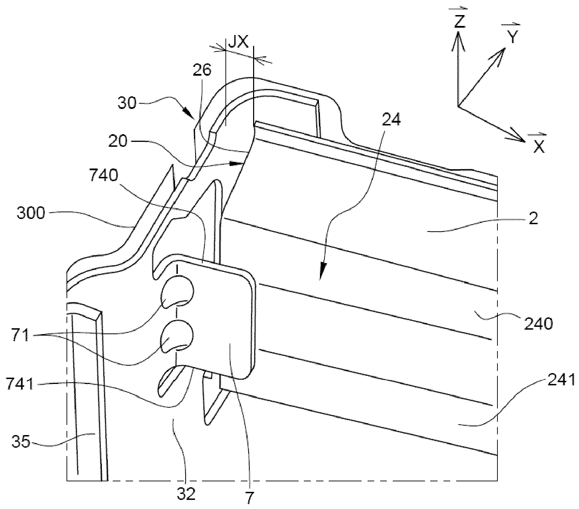

[Fig. 4] est une vue en perspective de l'extrémité avant de la barre de renfort de bandeau agencé sur l'armature de porte, selon l'invention. Sur l'ensemble de la description, l'avant et l'arrière sont définis selon le sens de marche d'un véhicule automobile. En marche avant et en ligne droite, le véhicule progresse de l'arrière vers l'avant, d'axe X. D'autre part, on considère que le véhicule repose sur un sol horizontal d'axe Y. Les termes « inférieur » et « supérieur » font référence à un axe vertical Z.

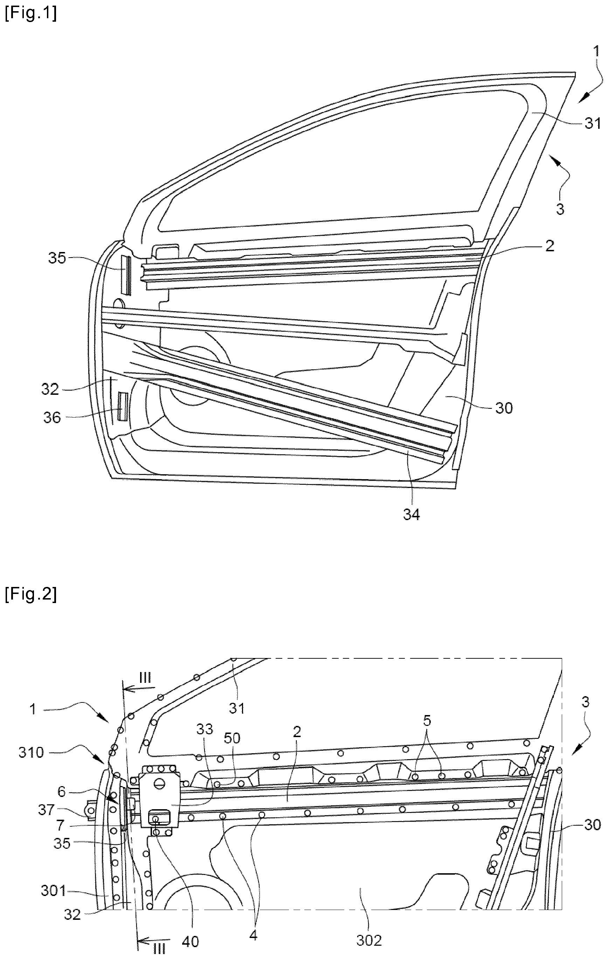

La figure 1 illustre schématiquement un ouvrant de véhicule automobile selon un mode de réalisation de l'invention. L'ouvrant peut être par exemple une porte 1 latérale pour un véhicule automobile. Plus particulièrement, il peut d'agir d'une porte latérale avant ou arrière qui est destinée à s'étendre en position de fermeture entre des montants latéraux (non représentés) reliant verticalement le soubassement au pavillon du véhicule. De tels montants peuvent être des pieds avant, central ou arrière d'un véhicule ayant une ou deux portes de chaque côté.

Tel qu'illustré sur la figure 1, la porte 1 comprend une barre 2 de renfort de bandeau et une armature 3. L'armature 3 comprend un caisson 30 relié par son bord longitudinal supérieur à un cadre 31 délimitant une ouverture au travers de laquelle un élément de vitrage (non représenté) est apte à s'étendre.

Le caisson 30 comprend une paroi de fond prolongée d'un bord transversal avant 300 qui est destiné à venir au droit d'un des montants latéraux susmentionnés. Le bord transversal avant 300 est lié à des charnières d'articulation dont seul la charnière supérieure 37 est représentée en figure 2. Pour assurer une bonne tenue à la déformation, chaque charnière est reliée à l'armature 3 de porte par une platine 35, 36 de fixation disposée à l'intérieur du caisson 30.

Compte tenu de la faible épaisseur du panneau d'acier utilisé à la fabrication du caisson 3, ce qui tend à un allègement de la porte, un renfort d'articulations 32 de section sensiblement à angle droit est placé au niveau de la ligne de pliure établie entre le fond et le bord transversal avant 300 du caisson 30 afin d'en augmenter la rigidité.

La porte 1 peut également comprendre une barre anti-intrusion 34 qui est sensiblement inclinée de telle sorte que son bord avant est en liaison par soudage avec le renfort d'articulations 32, à mi-hauteur du caisson 30, tandis que son bord arrière peut être disposé à recouvrement d'un coin inférieur arrière du caisson 30, comme cela est représenté à la figure 1. Une telle disposition vise à rendre le plus homogène possible la répartition des efforts sur l'armature 3 de porte 1, en cas de choc latéral. Chaque platine 35, 36 de fixation est réalisée à partir d'une plaque d'acier qui a une épaisseur supérieure à celle utilisée à la fabrication du caisson 30 et/ou du renfort d'articulations 32. Chaque platine 35, 36 comprend des goujons sur lesquels la charnière est montée par vissage. Chaque platine 35, 36 de fixation est disposée contre le renfort d'articulations 32, plus particulièrement contre sa face intérieure. La face extérieure du renfort est disposée contre le bord transversal 300 du caisson 30. Le renfort d'articulations 32 est ainsi agencé entre le bord transversal 300 et la platine 35, 36. Le caisson 30 ainsi que le renfort d'articulations 32 comprennent respectivement des ouvertures sensiblement coaxiales au travers desquelles les goujons s'étendent. Avantageusement, le renfort d'articulations 32 est une unique pièce qui est destinée à recevoir les charnières mais aussi la butée d'ouverture de porte afin de rigidifier la partie avant la porte contre toute déformation issue d'un fonctionnement normal d'ouverture et de fermeture de la porte.

Le renfort d'articulations 32 est fixé par soudage au caisson, préférentiellement au niveau d'un rebord tombé 301 réalisé verticalement le long du bord transversal 300 mais aussi au niveau de la paroi de fond 302.

Le renfort d'articulations 32 étant fixé au cadre 31, notamment au niveau de son inférieur avant 310, selon un agencement à superposition de la partie sommitale du renfort d'articulation 32 entre le caisson 30 et le cadre 31.

La barre 2 de renfort de bandeau comprend un bord longitudinal d'interfaçage supérieur 21 et inférieur 22.

Le bord d'interfaçage supérieur 21 est fixé au cadre 31 au niveau de son bord inférieur. Il peut être fixé également au caisson 30 au niveau de la paroi de fond 302. La fixation est réalisée par des points de soudure par résistance électrique qui réalisent lesdits moyens de liaison statique 4, 5. Les moyens de liaison statique 4 peuvent être des soudures à deux épaisseurs de matière.

La partie d'extrémité avant 20 de la barre 2 de renfort de bandeau est disposée à distance dudit premier point inférieur 40 de soudure de sorte qu'il existe un écart longitudinal compris entre 60 et 100 mm, notamment 80 mm.

Un renfort de fixation 33 d'un rétroviseur est agencé à l'extrémité avant de la barre 2 de renfort de bandeau, selon un recouvrement à superposition. Le renfort de fixation 33 est destiné à la fixation réversible d'un rétroviseur et comprend une ouverture au travers de laquelle l'outil utilisé à la réalisation dudit premier point inférieur 40 de soudure liant solidairement la barre 2 de renfort de bandeau au caisson 30.

Les moyens de liaison statique 4 comprennent d'autres points de soudure par résistance électrique disposés linéairement au prolongement du premier point inférieur 40 de soudure, le long d'un bord longitudinal d'interfaçage inférieure 22.

Les moyens de liaison statique 5 peuvent être des points de soudure à deux ou trois épaisseurs de matière selon qu'il s'agisse d'un empilement à superposition de la barre 2 avec le caisson 30 et/ou le cadre 31.

Les moyens de liaison statique 5 peuvent comprendre des points de soudure par résistance électrique disposés linéairement le long d'un bord longitudinal d'interfaçage supérieur 21. Le premier point supérieur 50 de soudure est disposé longitudinalement en retrait par rapport au premier point inférieur 40 de soudure liant solidairement la barre 2 de renfort de bandeau au caisson 30. Tandis que le premier point inférieur 40 de soudure est disposé au niveau de l'ouverture pratiquée dans le renfort de fixation 33, le premier point supérieur 50 de soudure est espacé en X du bord 26 d'extrémité 20 d'une distance au moins deux fois supérieure à celle séparant ce même bord du premier point inférieur 40 de soudure.

Du fait de ces écarts, la porte 1 comprend des moyens de liaison dynamique 6 dont le rôle est d'assurer une retenue de la barre 2 de renfort de bandeau lors d'un choc frontal.

A cette fin, lesdits moyens de liaison dynamique 6 comprennent au moins une butée 7 longitudinale qui s'étend en saillie hors du renfort d'articulations 32.

Selon un agencement préféré, la butée 7 est disposée à recouvrement de la barre 2 de renfort.

La butée 7 vient de matière du renfort d'articulations32 en ce sens qu'elle est réalisée lors d'une opération d'emboutissage selon une découpe suivie d'un pliage. La butée comprend une ligne de pliage sensiblement verticale le long de laquelle au moins un renfort 71 réalisé selon un contre emboutissage. Selon un mode de réalisation préféré, la butée 7 comprend deux renforts 71 destinés à s'opposer à la déformation le long de la ligne de pliure en créant des pontets de liaison entre les bords longitudinal et transversal du renfort d'articulations 32. Les deux renforts 71 sont disposés à équidistance des bords et entre eux. Une telle répartition permet une rigidité de la ligne de pliure qui soit garante d'une tenue à la déformation en cas de choc pour maintenir la barre 2 de renfort de bandeau.

La butée 7 peut avoir une hauteur comprise entre 20 et 40 mm, préférentiellement 28 mm.

Le renfort d'articulations 32 réalisé à partir d'une plaque d'acier ayant une épaisseur supérieure à celle utilisée à la fabrication du caisson 30. Le renfort d'articulation 32 est une pièce structurelle est ce sens qu'elle contribue fortement à la tenue à la déformation de la porte en cas de choc frontal.

Préférentiellement, la barre 2 de renfort de bandeau est de profil continu, c'est-à-dire qu'il comprend le même profil sur toute sa longueur. La barre 2 est réalisée par un principe de profilage par rouleau ce qui tend à réduire ne nombre d'opérations de fabrication, donc son coût de fabrication.

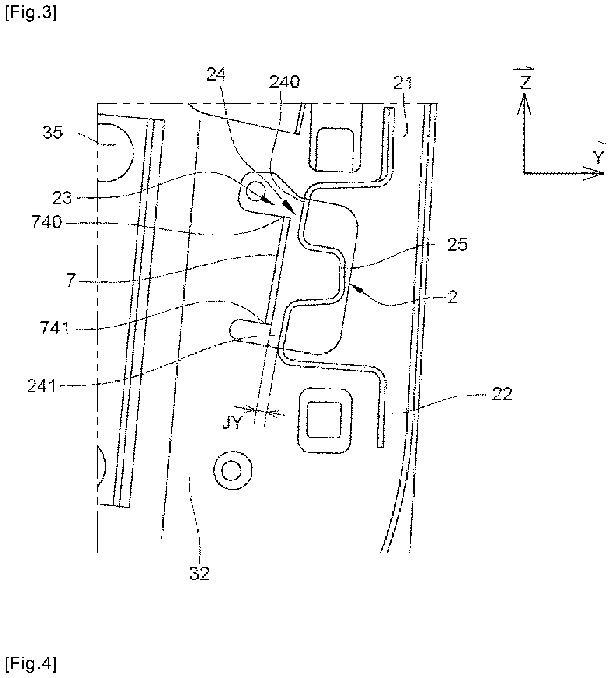

La barre 2 comprend des bords longitudinaux d'interfaçage 21, 22 qui sont destinés à venir en appui contre la paroi extérieure du caisson 30. Comme cela est rendu visible sur la figure 3, la barre 2 comprend un bord longitudinal d'interfaçage supérieur 21 disposé au-dessus du bord longitudinal d'interfaçage inférieur 22, les bords s'étendant dans un même plan sensiblement parallèle au plan XZ.

Les bords 21 et 22 sont mutuellement reliés l'un avec l'autre au moyen d'un pontet 23 de liaison définissant la tête 24 de bandeau.

La barre 2 peut comprendre une nervure 25 longitudinale de rigidification qui s'étend en saillie transversale depuis la tête 24 de bandeau vers les bords longitudinaux d'interfaçage 21, 22. La barre 2 de renfort de bandeau peut ainsi comprendre un profil sensiblement en oméga par l'agencement de deux créneaux verticaux ce qui lui confèrent une rigidité accrue à la tenue à la déformation en compression.

De manière avantageuse, la butée 7 longitudinale comprend des bords supérieur 740 et inférieur 741 qui s'étendent chacun au droit d'une partie approximativement médiane respectivement du créneau supérieur 240 et du créneau inférieur 241. Un tel agencement permet une répartition homogène des efforts de retenue appliqués par la butée 7 à la barre 2 en ce sens que chacune des lignes longitudinales de pliage définissant la tête 24 de bandeau peut être soumise sensiblement à un même effort ce qui permet une déformation répartie sur l'intégralité de l'extrémité avant 20 de la barre 2.

La butée 7 est parallèle à la tête 24 de bandeau selon une inclinaison par rapport au plan XZ.

Selon l'axe transversal Y, il y a un écart JY entre la tête 24 de bandeau et la butée 7 longitudinale pouvant être compris entre 2 et 5 mm, préférentiellement 4 mm, de telle sorte qu'en cas de choc frontal, le caisson 30 absorbe une quantité d'énergie avant que ne vienne le contact du renfort d'articulations 32 avec la barre 2 via la butée 7.

Selon l'axe longitudinal X, il y a un écart JX entre le bord 26 d'extrémité 20 et le renfort d'articulations 32 pouvant être compris entre 4 et 8 mm, préférentiellement 6 mm, de telle sorte qu'en cas de choc frontal, le caisson 30 absorbe une quantité d'énergie avant que ne vienne le contact du renfort d'articulations 32 avec la barre 2.

A l'état initial, le recouvrement de la barre 2 par la butée 7 peut être compris entre 6 et 10 mm, préférentiellement 8 mm, afin d'éviter une déformation localisée de l'extrémité 20 de la barre 2 par appui contre la butée 7.

Une telle conception desdits moyens de retenue dynamique permet de limiter le poids du renfort d'articulations 32, ce qui ne tend pas à alourdir le poids de la porte, donc à pénaliser la consommation du véhicule par l'ajout de cette fonction de retenue de la barre 2 de renfort de bandeau. La butée 7 est disposée sensiblement à hauteur de la platine 35 qui est solidarisée au bord transversal avant 300 du caisson 30. Les jeux JX et JY entre l'extrémité 20 de la barre 2 et le renfort 32 permettent une déformation locale du caisson durant laquelle le caisson est apte à se déformer avant une mise en appui de ce dernier contre la barre 2 de renfort. Selon l'intensité du choc, le caisson 30 se déforme avant de venir en appui contre la barre 2 de renfort de bandeau. Cela permet de réduire les coûts de réparation de la porte après choc. Si l'intensité du choc est supérieure, l'effort du choc frontal transite par la barre 2 de renfort de bandeau retenue en Y par la butée 7.

Du fait de la proximité entre la platine 35 et l'extrémité 20 de la barre 2, une partie de l'effort du choc peut transiter par la charnière 37, la platine 35, le renfort 32 d'articulations et la barre 2 de renfort de bandeau lorsque la butée 7 est concomitamment en appui contre la tête 24 de bandeau et le bord transversal avant 300 du caisson 30.

## Revendications

1. Porte (1) de véhicule automobile avec une barre (2) de renfort de bandeau, comprenant une armature (3) de porte, des moyens de liaison statique (4, 5) permettant de relier la barre à l'armature dans une configuration initiale, comprenant des moyens (6) de liaison dynamique pour relier la barre à l'armature dans une configuration déformée de l'armature de porte, lesdits moyens de liaison dynamique comprenant au moins une butée (7) longitudinale s'étendant au regard de la partie d'extrémité avant (20) de la barre afin de s'opposer à son déplacement transversal lors d'un choc frontal, l'armature (3) comprenant un caisson (30) surmonté par un cadre (31) destiné à recevoir un élément de vitrage, un renfort d'articulations (32) et un renfort de fixation (33) d'un rétroviseur, le renfort d'articulations (32) étant fixé au caisson (30), notamment au niveau de son bord transversal avant (300), et au cadre (31), notamment au niveau d'une zone d'extrémité inférieure avant (310), **caractérisée en ce que** la butée (7) est réalisée directement dans le renfort d'articulations (32) par emboutissage.

2. Porte (1) selon la revendication 1, **caractérisée en ce que** la butée longitudinale (7) est une butée de retenue s'étendant dans un plan sensiblement parallèle à la barre (2) de renfort de bandeau.

3. Porte (1) selon la revendication 1 ou 2, **caractérisée en ce que** le renfort d'articulations (32) s'étend verticalement le long d'approximativement toute la hauteur du bord transversal avant (300) du caisson (30) pour rendre apte la fixation des charnières supérieure et inférieure liant à rotation la porte à la caisse du véhicule.

4. Porte selon l'une quelconque des revendications précédentes, **caractérisée en ce que** la barre (2) de renfort de bandeau a un profil sensiblement en oméga en ce sens qu'elle comprend des bords longitudinaux d'interfaçage (21, 22) avec l'armature (3) de porte, ces bords étant reliés entre eux par un pontet longitudinal (23) délimitant une tête de bandeau (24) et comportant une nervure (25) s'étendant linéairement le long du pontet.

5. Porte (1) selon la revendication précédente, **caractérisée en ce que** la barre (2) de renfort de bandeau est réalisée par pliage et/ou roulage et/ou emboutissage.

6. Porte (1) selon l'une quelconque des revendications précédentes, **caractérisée en ce que** le bord d'extrémité avant (20) de la barre (2) de renfort de bandeau est écartée du renfort d'articulations par un jeu longitudinal (JX) et/ou un jeu transversal (JY), de telle sorte qu'en cas de choc frontal, l'armature (3) de porte absorbe une quantité d'énergie avant que la barre (2) de renfort de bandeau ne mette en liaison mécanique deux montants verticaux reliant le soubassement au pavillon du véhicule tout en délimitant en partie l'embrasure de porte.

7. Porte (1) selon l'une des revendications 4 à 6, **caractérisée en ce que** la barre (2) de renfort de bandeau a une tête (24) de bandeau s'étendant dans un plan incliné et comprend un créneau supérieur (240) et un créneau inférieur (241) reliés entre eux par la nervure (25) longitudinale, et **en ce que** la butée (7) est assujettie au profil de la barre (2) de renfort de bandeau de telle sorte que les bords (740, 741) supérieur et inférieur de la butée (7) s'étendent approximativement au droit d'une zone médiane de chacun des créneaux supérieur (240) et inférieur (241).

8. Véhicule, notamment une automobile, comportant une caisse sur laquelle est montée de manière mobile une porte (1) selon l'une quelconque des revendications précédentes

## Patentansprüche

1. Kraftfahrzeugtür (1) mit einer Bandverstärkungsleiste (2), umfassend ein Türgestell (3) und statische Verbindungsmittel (4, 5), die es ermöglichen, die Leiste mit dem Gestell in einer Ausgangskonfiguration zu verbinden, umfassend dynamische Verbindungsmittel (6) zum Verbinden der Leiste mit dem Gestell in einer verformten Konfiguration des Türgestells, wobei die dynamischen Verbindungsmittel zumindest einen Längsanschlag (7) umfassen, der sich gegenüber dem vorderen Endteil (20) der Leiste erstreckt, um ihrer Querbewegung bei einem Frontalaufprall entgegenzuwirken, wobei das Gestell (3) Folgendes umfasst: einen Kasten (30), über dem sich ein Rahmen (31) erhebt, der dazu bestimmt ist, ein Verglasungselement aufzunehmen, eine Gelenkverstärkung (32) und eine Verstärkung (33) zur Befestigung eines Rückspiegels, wobei die Gelenkverstärkung (32) am Kasten (30), insbesondere im Bereich seines vorderen Querrands (300), und am Rahmen (31), insbesondere im Bereich eines vorderen unteren Endbereichs (310), befestigt ist, **dadurch gekennzeichnet, dass** der Anschlag (7) durch Tiefziehen direkt in der Gelenkverstärkung (32) ausgeführt ist.

2. Tür (1) nach Anspruch 1, **dadurch gekennzeichnet, dass** der Längsanschlag (7) ein Rückhalteanschlag ist, der sich in einer zur Bandverstärkungsleiste (2) im Wesentlichen parallelen Ebene erstreckt.

3. Tür (1) nach Anspruch 1 oder 2, **dadurch gekennzeichnet, dass** sich die Gelenkverstärkung (32) vertikal über etwa die gesamte Höhe des vorderen Querrands (300) des Kastens (30) erstreckt, um die Befestigung des oberen und unteren Scharniers, die die Tür drehbar mit der Fahrzeugkarosserie verbinden, zu ermöglichen.

4. Tür nach einem der vorangehenden Ansprüche, **dadurch gekennzeichnet, dass** die Bandverstärkungsleiste (2) ein im Wesentlichen omegaförmiges Profil aufweist, so dass sie Längsränder (21, 22) umfasst, die eine Schnittstelle mit dem Türgestell (3) bilden, wobei die Ränder miteinander durch eine Längsbrücke (23) verbunden sind, die einen Bandkopf (24) begrenzt und eine Rippe (25) aufweist, die sich linear entlang der Brücke erstreckt.

5. Tür (1) nach dem vorangehenden Anspruch, **dadurch gekennzeichnet, dass** die Bandverstärkungsleiste (2) durch Falten und/oder Walzen und/oder Tiefziehen gefertigt ist.

6. Tür (1) nach einem der vorangehenden Ansprüche, **dadurch gekennzeichnet, dass** die vordere Endkante (20) der Bandverstärkungsleiste (2) um ein Längsspiel (JX) und/oder ein Querspiel (JY) von der Gelenkverstärkung beabstandet ist, so dass bei einem Frontalaufprall das Türgestell (3) eine Energiemenge absorbiert, bevor die Bandverstärkungsleiste (2) zwei vertikale Stützen, die den Unterbau mit dem Dach verbinden und zugleich die Türöffnung teilweise begrenzen, mechanisch miteinander verbindet.

7. Tür (1) nach einem der Ansprüche 4 bis 6, **dadurch gekennzeichnet, dass** die Bandverstärkungsleiste (2) einen Bandkopf (24) aufweist, der sich in einer schiefen Ebene erstreckt, und einen oberen Abschnitt (240) und einen unteren Abschnitt (241) umfasst, die durch die Längsrippe (25) miteinander verbunden sind, und dass der Anschlag (7) dem Profil der Bandverstärkungsleiste (2) folgt, so dass sich der obere und der untere Rand (740, 741) des Anschlags (7) etwa annähernd auf gleicher Höhe wie ein Mittelbereich des oberen (240) bzw. unteren Abschnitts (241) erstrecken.

8. Fahrzeug, insbesondere Kraftfahrzeug, umfassend eine Karosserie, an der eine Tür (1) nach einem der vorangehenden Ansprüche beweglich montiert ist.

## Claims

1. Door (1) for a motor vehicle having a door reinforcing bar (2), comprising a door framework (3), static-linking means (4, 5) for connecting the bar to the framework in an initial configuration, comprising dynamic-linking means (6) for connecting the bar to the framework in a deformed configuration of the door framework, said dynamic-linking means comprising at least one longitudinal stop (7), which extends opposite the front end portion (20) of the bar in order to counter the transverse displacement thereof during a frontal impact, the framework (3) comprising a box (30) surmounted by a frame (31), which is intended for receiving a glazing element, a hinges reinforcement (32) and a fastening reinforcement (33) for fastening a rear-view mirror, the hinges reinforcement (32) being fastened to the box (30), in particular at the front transverse edge (300) thereof, and to the frame (31), in particular at a front lower end zone (310), **characterized in that** the stop (7) is produced directly in the hinges reinforcement (32) by stamping.

2. Door (1) according to Claim 1, **characterized in that** the longitudinal stop (7) is a retaining stop extending in a plane which is substantially parallel to the door reinforcing bar (2).

3. Door (1) according to Claim 1 or 2, **characterized in that** the hinges reinforcement (32) extends vertically along approximately the entire height of the front transverse edge (300) of the box (30) in order to allow the fastening of the upper and lower hinges rotationally linking the door to the body of the vehicle.

4. Door according to any one of the preceding claims, **characterized in that** the door reinforcing bar (2) has a substantially omega-shaped profile in the sense that it comprises longitudinal interfacing edges (21, 22) for interfacing with the door framework (3), these edges being connected to one another by a longitudinal bridge (23), which delimits a reinforcing-bar top (24) and has a rib (25) extending linearly along the bridge.

5. Door (1) according to the preceding claim, **characterized in that** the door reinforcing bar (2) is produced by bending and/or rolling and/or stamping.

6. Door (1) according to any one of the preceding claims, **characterized in that** the front end edge (20) of the door reinforcing bar (2) is spaced apart from the hinges reinforcement by a longitudinal clearance (JX) and/or a transverse clearance (JY) such that, in the event of a frontal impact, the door framework (3) absorbs an amount of energy before the door reinforcing bar (2) mechanically connects two vertical posts connecting the underframe to the roof of the vehicle whilst still partially delimiting the door opening.

7. Door (1) according to one of Claims 4 to 6, **characterized in that** the door reinforcing bar (2) has a reinforcing-bar top (24), which extends in an inclined plane and comprises an upper crenelation (240) and a lower crenelation (241), which are connected to one another by the longitudinal rib (25), and **in that** the stop (7) is attached to the profile of the door reinforcing bar (2) such that the upper and lower edges (740, 741) of the stop (7) extend approximately in line with a median zone of each of the upper crenelation (240) and lower crenelation (241).

8. Vehicle, in particular a motor vehicle, having a body on which a door (1) according to any one of the preceding claims is movably mounted.
